# EUROPÄISCHE PATENTSCHRIFT

(11) **EP 3 092 534 B1**
(45) Veröffentlichungstag und Bekanntmachung des Hinweises auf die Patenterteilung: **08.08.2018**
(21) Anmeldenummer: 14816231.6
(22) Anmeldetag: 18.12.2014
(51) Int. Cl.: G05B 23/02, G05B 13/02, G05D 16/20

(54) **MONITORINGSYSTEM UND -VERFAHREN FÜR FLUIDFÜHRENDES PRODUKTIONSSYSTEM**
MONITORING SYSTEM AND MONITORING METHOD FOR A FLUID-CONDUCTING PRODUCTION SYSTEM
SYSTÈME ET PROCÉDÉ DE SURVEILLANCE D'UN SYSTÈME DE PRODUCTION ACHEMINANT UN FLUIDE

(30) Priorität: 09.01.2014 DE 102014000276
(43) Veröffentlichungstag der Anmeldung: 16.11.2016
(73) Patentinhaber: Fresenius Medical Care Deutschland GmbH, 61352 Bad Homburg (DE)
(72) Erfinder: BRAUN, Christian, 67434 Neustadt an der Weinstrasse (DE)
(74) Vertreter: Dreyhsig, Jörg
(86) Internationale Anmeldenummer: PCT/EP2014/078407
(87) Internationale Veröffentlichungsnummer: WO 2015/104156

(56) Entgegenhaltungen:
- EP-A1- 2 372 169
- US-A1- 2005 274 417
- KANG LIN ET AL: "Extension of Power Line Fault Location Techniques to Pressurized Line Diagnostics", POWER SYMPOSIUM, 2006. NAPS 2006. 38TH NORTH AMERICAN, IEEE, PI, 1. September 2006 (2006-09-01), Seiten 465-473, XP031088244, ISBN: 978-1-4244-0227-4

## Beschreibung

### Technisches Gebiet

Die Erfindung bezieht sich auf elektronische Datenverarbeitung im Allgemeinen und im Speziellen auf ein Computersystem, Computer-Programmprodukt und computerimplementiertes Verfahren zur Überwachung von Komponenten eines fluidführenden kaskadierenden Produktionssystems.

### Hintergrund

In fluidführenden kaskadierenden Produktionssystemen, wie z.B. Wasseraufbereitungssystemen für die Dialyse, werden nach jedem Produktions- bzw. Reinigungsschritt Sensoren zur Überwachung spezifischer Parameter eingesetzt. Die Sensoren liefern für jede sensorüberwachte Komponente des Produktionssystems Messdaten, die zur Ermittlung des Betriebszustands der jeweiligen Komponente verwendet werden können. Ein Beispiel für solch einen spezifischen Parameter ist die Druckdifferenz zwischen dem Eingangsdruck einer spezifischen Komponente und dem Ausgangsdruck der spezifischen Komponente. So ist beispielsweise diese Druckdifferenz für einen Sandfilter verschieden, wenn der Sandfilter mit gereinigtem Sand gefüllt ist oder wenn der Filter mit eingeschwemmten Partikeln verunreinigt ist. Aus dem spezifischen Parameter (z.B. Druckdifferenz) lässt sich somit ein Rückschluss auf den Betriebszustand der jeweiligen Komponente ziehen. Bei einer Überwachung der spezifischen Parameter für die einzelnen Komponenten des kaskadierenden Produktionssystems ist es möglich, die Funktionalität des Produktionssystems aus der Ferne zu überwachen und ggf. Service- oder Reparaturaufträge zu planen und vorzubereiten. Solche komplexen Überwachungssysteme verwenden in der Regel zwei Sensoren pro Komponente, wobei der erste Sensor den Eingangswert des spezifischen Parameters und der zweite Sensor den Ausgangswert des Parameters für die jeweilige Komponente misst. Für kaskadierende Produktionssysteme bedarf es somit einer großen Anzahl an Sensoren, was in einer hohen Systemkomplexität resultiert und ein hohes Messdatenaufkommen zur Folge hat.
US 2005/0274417 beschreibt ein sicherheitstechnisches System zur Verwendung bei der Diagnose des Betriebes eines Basis-Prozessleitsystems mit Prozessleitungen, die einen Fluss an Prozessflüssigkeit beinhalten, wobei das sicherheitstechnische System einen Ventilstellungsregler aufweist, der so gestaltet ist, dass er ein Ventil steuert, das den Fluss der Prozessflüssigkeit durch die Prozessleitungen als Reaktion auf ein Steuersignal steuert; sowie eine Diagnose-Schaltungsanordnung.

### Zusammenfassung

Es besteht daher ein Bedarf für ein computergestütztes System von geringer Komplexität zur Überwachung von Systemkomponenten in fluidführenden kaskadierenden Produktionssystemen bei einer gleichzeitigen Verringerung des mit der Überwachung verbundenen Messdatenaufkommens.

Dieses Problem wird durch die Merkmale der unabhängigen Ansprüche gelöst. Eine Ausführungsform betrifft ein Computersystem zur Bestimmung eines Betriebszustands einer Systemkomponente in einem fluidführenden kaskadierenden Produktionssystems. Beispiele für solche fluidführenden kaskadierenden Produktionssysteme sind Wasseraufbereitungsanlagen, Raffinerien, chemische Prozessanlagen oder andere Anlagen, in denen eine zu verarbeitende Flüssigkeit über mehrere kaskadierend angeordnete Systemkomponenten (z.B., Filter, Pumpen, etc.) des Produktionssystems verändert bzw. aufbereitet wird.

Das Computersystem umfasst dabei eine Schnittstelle zum Empfangen eines ersten und eines zweiten Druckpulssignals. Das erste Druckpulssignal charakterisiert einen Druckpuls vor Durchlaufen des Produktionssystems und das zweite Druckpulssignal charakterisiert den Druckpuls nach Durchlaufen des Produktionssystems. Beispielsweise kann dieser Druckpuls durch das Computersystem selbst mittels eines Kontrollsignals an eine entsprechende Systemkomponente (z.B., Pumpe) des Produktionssystems ausgelöst werden. Der Druckpuls kann aber auch manuell durch einen Nutzer des Produktionssystems oder in vordefinierten Intervallabständen durch das Produktionssystem selbst ausgelöst werden. Ein Druckpuls kann dabei die Form einer kurzzeitigen Druckerhöhung aufweisen, bei der der Druck schnell wieder auf das Niveau des ursprünglichen Zustands absinkt. Es sind aber auch andere Pulsformen möglich, wie z.B. eine Stufenform bei der der Druck vom ursprünglichen Niveau sprungartig auf ein höheres Niveau angehoben wird, welches anschließend über einen längeren Zeitraum gehalten wird. Dieser Zeitraum umfasst dabei die Länge der Impulsantworten der Systemkomponenten.

Der Druckparameter steht dabei als Beispiel für eine physikalische Messgröße, welche für das gesamte Produktionssystem durchgehend vorhanden ist. Andere physikalische Messparameter können ebenfalls Verwendung finden. Beispielsweise könnten ergänzend zu Druckmesssensoren auch Sensoren zur Bestimmung chemischer/physikalischer Parameter, wie Chlorgehalt, Härte, Eisengehalt, ph-Wert oder ähnlicher Parameter, deren Wert durch das Durchlaufen einer Systemkomponente beeinflusst wird, eingesetzt werden. Der Fachmann ist in der Lage, das im Folgenden anhand des Druckparameters erläuterte Prinzip auf andere systemcharakterisierende technische Parameter zu übertragen bzw. zu erweitern.

Der Druckpuls wird dabei an einer Stelle im Produktionssystem erzeugt, die hinsichtlich der Ausbreitungsrichtung der durch den Druckpuls ausgelösten Druckwelle vor den anderen Systemkomponenten des Produktionssystems liegt. Solche Systemkomponenten können beispielsweise bestimmte Filterkomponenten zur Reinigung des Fluids oder zur chemischen Veränderung des Fluids sein. In einer Ausführungsform wird das erste Druckpulssignal von einem ersten Drucksensor des Produktionssystems erfasst, der zwischen der Druckpulserzeugungskomponente und den anderen Systemkomponenten angebracht ist. Das zweite Druckpulssignal wird von einem zweiten Drucksensor des Produktionssystems erfasst, der hinsichtlich der Ausbreitungsrichtung der durch den Druckpuls ausgelösten Druckwelle nach der letzten Systemkomponente angebracht ist. In einer alternativen Ausführungsform kann das erste Druckpulssignal direkt von der Druckpulserzeugungskomponente erfasst werden, die damit die Funktion des ersten Drucksensors ausfüllt. Es werden somit die Messwerte von nur zwei Messpunkten benötigt, welche die Veränderung des Druckpulses über alle im Produktionssystem vorhanden Komponenten für das Gesamtsystem charakterisieren.

Das Computersystem umfasst weiterhin eine Speichereinheit zur Speicherung einer Mehrzahl an Übertragungsfunktionen. Eine gespeicherte Übertragungsfunktion beschreibt dabei eine betriebszustandsabhängige Impulsantwort von mindestens einer der Systemkomponenten des Produktionssystems auf den Druckpuls. Im Allgemeinen beschreibt eine Übertragungsfunktion mathematisch die Beziehung zwischen dem Ein- und Ausgangssignal eines dynamischen Systems beispielsweise im Frequenzraum. Im Kontext des Produktionssystems kann jede Systemkomponente als ein Subsystem verstanden werden. Mithilfe der Übertragungsfunktion kann für ein beliebiges Eingangssignal (Druckpuls) das Ausgangssignal (veränderter Druckpuls), d. h. die Reaktion der entsprechenden Systemkomponente bestimmt werden. Typisch für das Systemverhalten ist die zeitverzögerte Reaktion des Ausgangssignals gegenüber dem Eingangssignal.

Die Übertragungsfunktion einer Systemkomponente ist eine Funktion der Frequenz, d. h., sie beschreibt, welche Veränderung jede einzelne Frequenz des Eingangssignals erfährt. Mit ihr kann berechnet werden, wie ein beliebiges Eingangssignal durch die Systemkomponente umgewandelt wird bzw. welches Ausgangssignal diese hervorruft. Übertragungsfunktionen zur Berechnung der Reaktion eines Systems sind auf alle Systeme anwendbar, die man durch lineare Differential- oder Differenzengleichungen darstellen kann. Eine Systemkomponente, wie z.B. ein Sandfilter, kann beispielsweise ein typisches Dämpfungsverhalten aufweisen, welches den Druckpuls je nach Grad der Verunreinigung des Filters mit Einschwemmpartikeln unterschiedlich dämpft. Für jede Systemkomponente können in der Speichereinheit eine oder mehrere Übertragungsfunktionen abgelegt sein, die z.B. die Impulsantwort der Systemkomponente im idealen Betriebszustand (gereinigt) oder in Betriebszuständen, die vom idealen Zustand abweichen (leicht verunreinigt, stark verunreinigt, Reinigungslauf, etc.), beschreiben.

Beispiele für häufig verwendete Übertragungsfunktionen sind: Butterworth-Filter, Bessel-Filter, Cauer-Filter, Tschebyscheff-Filter, Gaußfilter, Raised-Cosine-Filter, P-Glied, I-Glied, D-Glied, PT1-Glied, PT2-Glied oder Totzeit-Glied.

Das Computersystem umfasst weiterhin eine Auswerteeinheit zum Ermitteln einer Übertragungsfunktion für das Produktionssystems aus dem ersten und zweiten Druckpulssignal. Da die beiden Druckpulssignale die Veränderung des Druckpulses über alle Systemkomponentenhinweg beschreiben, stellt die Signaldifferenz ein Maß für die Impulsantwort des Gesamtsystems dar. Die Übertragungsfunktion des Gesamtsystems beinhaltet somit die Frequenzanteile, welche mit den Impulsantworten der einzelnen Systemkomponenten verbunden sind. Da die einzelnen Systemkomponenten aufgrund ihrer spezifischen Dämpfungscharakteristika komponentenspezifische Impulsantworten hervorrufen, sind damit auch komponentenspezifische Frequenzspektren mit den jeweiligen Systemkomponenten korreliert. Aus den einzelnen Übertragungsfunktionen der verschiedenen Systemkomponenten lässt sich die Übertragungsfunktion des Gesamtsystems berechnen. Berechnet man nun die Übertragungsfunktion für das gesamte Produktionssystem auf der Basis der systemkomponentenspezifischen Übertragungsfunktionen, die deren störungsfreien Betriebszustand beschreiben, erhält man die Übertragungsfunktion des Gesamtsystems für den störungsfreien Betriebszustand. Die Auswerteeinheit kann somit durch einen Vergleich der auf Basis der Messwerte ermittelten Übertragungsfunktion für das Produktionssystem mit der auf Basis der einzelnen systemkomponentenspezifischen Übertragungsfunktionen berechneten Gesamtübertragungsfunktion für das Produktionssystem ermitteln, ob sich das Produktionssystem in einem störungsfreien Betriebszustand befindet. Stellt die Auswertungskomponente bei diesem Abgleich Abweichungen vom störungsfreien Betriebszustand fest, kann mittels der Frequenzspektralanalyse festgestellt werden, welche Systemkomponente(n) für die Abweichung(en) verantwortlich sind. Auf der Basis der Übertragungsfunktionen für eine spezifische Systemkomponente des Produktionssystems kann letztendlich der Betriebszustand dieser spezifischen Systemkomponente des Produktionssystems bestimmt werden. Beispielsweise kann die Auswerteinheit, nachdem die spezifische Systemkomponente mittels der Frequenzspektralanalyse bestimmt wurde, die Übertragungsfunktion für das Gesamtproduktionssystem erneut berechnen und dabei die komponentenspezifische Übertragungsfunktion für einen nichtstörungsfreien Betriebszustand der Systemkomponente verwenden. Wenn die somit berechnete Gesamtsystemübertragungsfunktion dann mit der aus den Messwerten bestimmten Gesamtsystemübertragungsfunktion hinreichend übereinstimmt, lässt sich daraus auf den Betriebszustand der spezifischen Systemkomponente schließen.

Der Begriff Störung bezeichnet hier generell eine Abweichung vom idealen Betriebszustand. In diesem Sinne werden auch besondere Betriebszustände als Störung betrachtet, selbst wenn diese Betriebszustände bewusst herbeigeführt werden. Somit fällt zum Beispiel auch ein Reinigungszustand einer Systemkomponente darunter, da z.B. während eines Spülvorgangs die Impulsantwort dieser Komponente von der Impulsantwort während des normalen Produktionsbetriebs abweicht.

Weitere Aspekte der vorliegenden Erfindung sind ein computer-implementiertes Verfahren, welches durch das beschriebene Computersystem ausgeführt werden kann, sowie ein Computerprogrammprodukt mit Instruktionen, die vom besagten Computersystem derart abgearbeitet werden können, so dass das computer-implementierte Verfahren entsprechend ausgeführt wird.

Weitere vorteilhafte Ausführungsformen der Erfindung finden sich in den abhängigen Ansprüchen wieder.

### Kurzbeschreibung der Zeichnungen

FIG. 1 zeigt ein Ausführungsbeispiel des erfindungsgemäßen Computersystems zur Überwachung von Systemkomponenten eines Produktionssystems;
FIG. 2 illustriert verschiedene Beispiele eines erfindungsgemäßen Druckpulses;
FIG. 3A zeigt beispielhaft Dämpfungskennlinien von Systemkomponenten mit über die Zeit abnehmendem Dämpfungsverhalten;
FIG. 3B zeigt beispielhaft Dämpfungskennlinien von Systemkomponenten mit über die Zeit zunehmendem Dämpfungsverhalten;
FIG. 4A veranschaulicht die Berechnung einer zeitabhängigen Modellübertragungsfunktion für das gesamte kaskadierende Produktionssystem;
FIG. 4B veranschaulicht die reale Übertragungsfunktion für das gesamte kaskadierende Produktionssystem;
FIG. 5 veranschaulicht eine erfindungsgemäße Ausführungsform zum Abgleich einer realen Übertragungsfunktion mit einer Modellübertragungsfunktion; und
FIG. 6 ist ein vereinfachtes Ablaufdiagram eines erfindungsgemäßen computerimplementierten Verfahrens.

### Detailbeschreibung

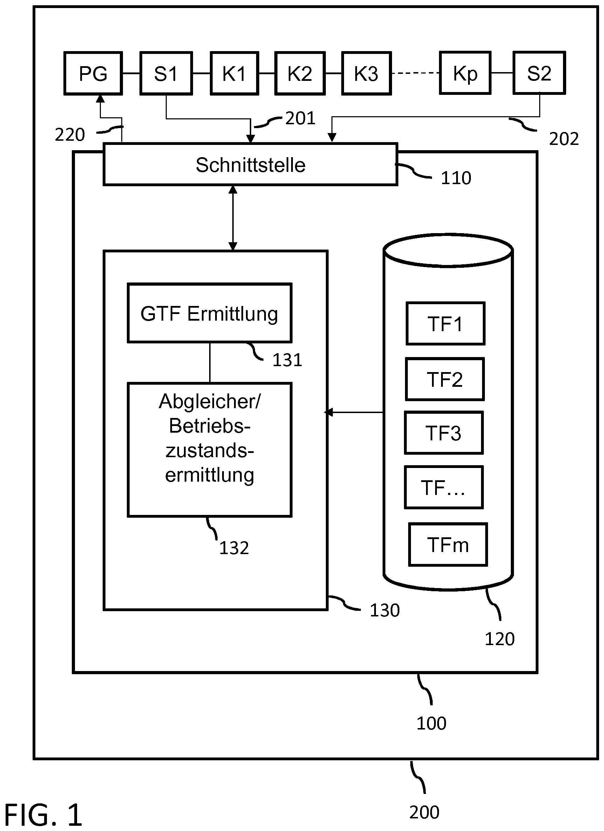

FIG. 1 zeigt ein Ausführungsbeispiel des erfindungsgemäßen Computersystems 100 zur Überwachung von Systemkomponenten K1 bis Kp eines Produktionssystems 200.

Das fluidführende kaskadierende Produktionssystem 200 beinhaltet eine Mehrzahl an Systemkomponenten, die in einer kaskadierenden Anordnung angebracht sind und dazu geeignet sind, die vom Produktionssystem 200 geführte Flüssigkeit (Fluid) zu bearbeiten. Jede Systemkomponente führt dabei einen Bearbeitungsschritt durch, der der Aufbereitung oder Umwandlung des Fluids dient. Die Systemkomponenten können wie im Ausführungsbeispiel dargestellt in einer Kaskade sequentiell angeordnet sein. Es können aber auch Verzweigungen vorhanden sein, welche den Fluidlauf streckenweise parallelisieren, wobei die parallelisierten Pfade spätestens in der letzten Kaskadenstufe Kp wieder zusammengeführt werden.

Ein Beispiel für das fluidführende kaskadierende Produktionssystem 200 ist ein Wasseraufbereitungssystem für die Dialyse. Beispiele für kaskadierend angeordnete Systemkomponenten K1 bis Kp eines solchen Wasseraufbereitungssystems sind: Rohwassereingangseinheit, Rohwassertank, Medienfilter, Partikelfilter, Enthärter, Aktivkohlefilter, Tiefenfilterkartuschen, Grobfilter oder Spiralfilter.

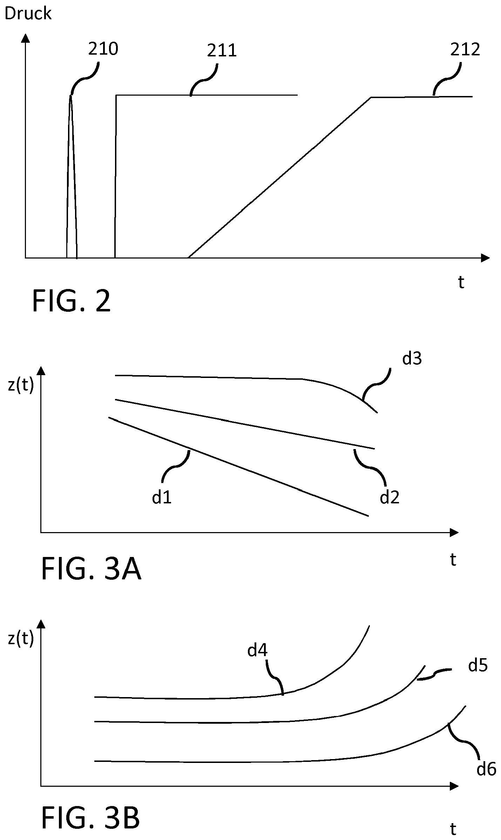

Das Produktionssystem 200 ist mit zwei Sensoren S1, S2 ausgestattet. Die Sensoren S1, S2 werden zur Überwachung spezifischer technischer Parameter des Produktionssystems 200 eingesetzt. Beispiele für solche technischen Parameter sind der Druck am Anfang der Produktionskaskade und am Ende der Produktionskaskade oder chemische Parameter wie z.B. der Chlorgehalt, Härtegrad, Eisengehalt oder ph-Wert des Fluids jeweils am Anfang der Produktionskaskade und am Ende der Produktionskaskade. In einer Ausführungsform sind die Sensoren S1 und S2 als Drucksensoren implementiert, die als Impulsnehmereinheiten fungieren, um ein erstes und ein zweites Druckpulssignal 201, 202 zu erzeugen, wobei das erste Druckpulssignal 201 einen Druckpuls vor Durchlaufen des Produktionssystems 200 charakterisiert und das zweite Druckpulssignal 202 den Druckpuls nach Durchlaufen des Produktionssystems 200 charakterisiert. Der Druckpuls kann von einer Pulsgebereinheit PG erzeugt werden. Solche Druckpulserzeuger sind im Stand der Technik wohl bekannt und können Druckpulse unterschiedlicher Formen, wie z.B. Peak- 210, Sprung- 211 oder Rampenform 212 (vgl. FIG. 2), erzeugen. Der Pulsgeber kann dabei von außen (z.B. durch Computersystem 100) angesteuert bzw. getaktet werden. Die Antwort, d.h. die Zeitfunktion am Ausgang wird als Impulsantwort bezeichnet. Es ist aber auch möglich, den Pulsgeber PG durch eine innere Taktung zu triggern (z.B. in regelmäßigen Zeitintervallen). In einer alternativen Ausführungsform kann der Pulsgeber PG die Funktion des ersten Drucksensors S1 mit übernehmen. Da der Pulsgeber bereits den durch den Druckpuls bewirkten Druckverlauf kennt, kann das damit verbundene Druckpulssignal als Ausgangssignal des Pulsgebers erzeugt werden.

Die von den beiden Sensoren S1, S2 bzw. vom Pulsgeber PG und dem zweiten Drucksensor S2 erzeugten Druckpulssignale 201, 202 können über eine entsprechend konfigurierte Schnittstelle 110 eines Computersystems 100 von diesem empfangen werden. Das Computersystem 100 kann dabei ein integrierter Bestandteil des Produktionssystems 200 sein (wie in FIG. 1 dargestellt). Das Computersystem kann aber auch ein eigenständiges System sein, welches mit dem Produktionssystem lediglich kommunikativ gekoppelt ist. Eine Übertragung der Sensorsignale 201, 202 des Produktionssystems 200 an das Computersystem 100 kann dabei mit Standardkommunikationstechniken, wie z.B. einem Datenbus oder einer drahtlosen Funkverbindung, mittels eines geeigneten Kommunikationsprotokolls erfolgen. Damit wird auch eine Überprüfung und oder Wartungsplanung des Produktionssystems 200 aus der Ferne ermöglicht.

Das Computersystem 100 umfasst weiterhin eine Auswerteeinheit 130 mit einer GTF-Ermittlungskomponente 131, welche aus dem ersten und zweiten Druckpulssignal 201, 202 eine reale Übertragungsfunktion GTF für das Produktionssystem 200 insgesamt ermittelt. Das erste Druckpulssignal stellt ja unmittelbar den Impulsverlauf des vom Pulsgeber PG erzeugten Druckpulses dar. Das zweite Druckpulssignal 202 dagegen stellt die Impulsantwort des Gesamtsystems 200 auf den ursprünglich erzeugten Druckpuls dar. Somit lässt sich aus der Impulsantwort des Gesamtproduktionssystems 200 auch die damit verbundene Übertragungsfunktion GTF berechnen. Dies kann beispielsweise mit einer Frequenzspektralanalyse mittels Fourier-Transformationen erfolgen. Verwendet werden können dabei auch Varianten der Fourier-Transformation, wie z.B Fourier-Reihe, Kontinuierliche Fourier-Transformation, Diskrete Fourier-Transformation (DFT) oder Fourier-Transformation für zeitdiskrete Signale (DTFT).

Das Computersystem 200 umfasst weiterhing eine Speichereinheit 120, welche konfiguriert ist, eine Mehrzahl an Übertragungsfunktionen TF1 bis TFm zu speichern. Für die Speichereinheit kann dabei ein entsprechender Speicherbereich des Computerspeichers verwendet werden. Die Übertragungsfunktionen TF1 bis TFm können dabei in einer Datenbank oder in einem geeigneten Filesystem abgelegt sein. Jede Übertragungsfunktion TF1 bis TFm beschreibt dabei eine betriebszustandsabhängige Impulsantwort von mindestens einer Systemkomponente (K1 bis Kp) auf den Druckpuls. Die Übertragungsfunktionen TF1 bis TFm können eine zeitabhängige Komponente beinhalten, die es erlaubt, bei Kenntnis des zeitlichen Verlaufs einer Eingangsgröße, die entsprechende Ausgangsgröße zu jedem Zeitpunkt zu ermitteln. Für eine spezifische Systemkomponente K1 können mehrere Übertragungsfunktionen TF1, TF2, TF3 abgelegt sein. Zwischen einer Systemkomponente und den Übertragungsfunktionen besteht somit eine 1:n Relation. Somit kann die Anzahl m der systemkomponentenspezifischen Übertragungsfunktionen TF1 bis TFm größer als die Anzahl p der entsprechenden Systemkomponenten K1 bis Kp sein. Beispielsweise kann die Übertragungsfunktion TF1 den störungsfreien Betriebszustand eines Sandfilters K1 beschreiben und die Übertragungsfunktionen TF2, TF3 den Betriebszustand desselben Filters K1 entsprechend in Abhängigkeit einer Störgröße (z.B. eingeschwemmte Partikel) oder während eines Reinigungslaufs beschreiben. Im Falle einer zeitabhängigen Übertragungsfunktion können mit Hilfe einer einzelnen Übertragungsfunktion diese Betriebszustände desselben Filterns zu den verschiedenen Zeitpunkten berechnet werden.

Für jede Systemkomponente K1 bis Kn kann zumindest eine Übertragungsfunktion für den störungsfreien Betrieb und eine Übertagungsfunktion zur Beschreibung des Einflusses einer Störgröße hinterlegt werden. Für den Fall, dass die Störgröße als eine Funktion der Zeit z(t) beschrieben werden kann und der Zeitpunkt t=0 dabei dem ungestörten Zustand entspricht, kann eine einzige zeitabhängige Übertragungsfunktion für diese Systemkomponente sowohl den störungsfreien Betrieb als auch den Betrieb unter Einfluss der Störgröße beschreiben. FIG. 2 erläutert im Detail, wie beispielsweise im Falle der Druckdifferenz bei Systemfilterkomponenten (alle Systemkomponenten, die eine Filtrationsleistung aufweisen), die durch eingeschwemmte Partikel über die Zeit verursachte Änderung der Druckdifferenz als eine Dämpfung des entsprechenden Subsystems in Abhängigkeit der Zeit t dargestellt werden kann.

Aus den Übertragungsfunktionen der einzelnen Systemkomponenten, die einen störungsfreien Betriebszustand beschreiben, kann die Auswerteeinheit 130 (z.B. mittel GTF Ermittlungskomponente 131) eine Übertragungsfunktion für das Gesamtproduktionssystem 200 berechnen. Eine Abgleicherkomponente 132 der Auswerteinheit 130 kann dann die reale Übertragungsfunktion GTF mit der berechneten Übertragungsfunktion für das Produktionssystem im störungsfreien Betriebszustand vergleichen und eventuelle Abweichungen ermitteln. Der Abgleicher 132 kann weiterhin durch Abgleich der realen Systemübertragungsfunktion GTF mit der gespeicherten Mehrzahl an Übertragungsfunktionen TF1 bis TFm ermitteln, welche der Systemkomponenten K1 bis Kp in welcher Art und Weise vom störungsfreien Zustand abweicht. Die Übertragungsfunktionen können dabei Darstellungen der Impulsantworten der jeweiligen Systemkomponenten im Frequenzbereich sein. Das heißt, dass ein Frequenzspektrum eine betriebszustandsabhängige zeitliche Impulsantwort der zugehörigen Systemkomponente im Frequenzbereich abbildet und ein Abgleich mit der realen Systemübertragungsfunktion durch einen Vergleich der entsprechenden Frequenzspektren stattfinden kann und somit letztendlich der Betriebszustand einer spezifischen Systemkomponente K1 bis Kp des Produktionssystems 200 bestimmt werden kann. Bei einem Vergleich der Frequenzspektren sind sowohl die Frequenzen der Spektrallinien als auch die Amplituden der Spektrallinien charakteristisch für den jeweiligen Betriebszustand.

Für Systemkomponenten, deren jeweiliger Betriebszustand lediglich eine Veränderung der Amplitude im Frequenzspektrum bei gleichbleibender Frequenz bewirkt, kann direkt aus der realen Systemübertragungsfunktion auf die entsprechenden Systemkomponenten anhand ihrer charakteristischen Frequenzen geschlossen werden. Mittels der 'Amplitudenänderung lässt sich dann auf den Betriebszustand der jeweiligen Komponente schließen.

Für Systemkomponenten, deren veränderter Betriebszustand auch eine Veränderung der für die jeweilige Systemkomponente charakteristischen Frequenzen nach sich zieht, kann durch einen Frequenzabgleich der realen Systemübertragungsfunktion mit der für den störungsfreien Zustand berechneten Systemübertragungsfunktion zunächst auf die Systemkomponente(n) geschlossen werden, welche für Abweichungen vom störungsfreien Zustand verantwortlich sind. Sodann kann wiederum über die entsprechenden Amplituden in der realen Übertragungsfunktion durch Abgleich mit den jeweiligen komponentenspezifischen Übertragungsfunktionen auf deren tatsächlichen Betriebszustand geschlossen werden.

Das Produktionssystem kann noch einen weiteren Drucksensor (nicht dargestellt) beinhalten. Von diesem dritten Drucksensor kann das Computersystem ein drittes Druckpulssignal empfangen, welches einen absoluten Druckabfall im Produktionssystem charakterisiert und bei der Ermittlung der Übertragungsfunktion für das Produktionssystem berücksichtigt wird. Die Ermittlung der Übertragungsfunktion kann dabei im Zusammenspiel mit nachfolgenden Produktions-/Reinigungsstufen für einen dynamischen und einen statischen Betriebszustand unterscheiden werden. Der dynamische Zustand liegt beispielsweise bei geöffnetem Eingangsventil einer nachfolgenden Systemkomponente oder Systemweiterverarbeitungseinheit (z.B. Umkehrosmose) vor. Der Fluss durch das Produktionssystem ist somit im dynamischen Zustand > 0l/min. In diesem Zustand kann sich der Druckpuls durch das Produktionssystem fortpflanzen und das zuvor beschriebene Verfahren zur Ermittlung des Betriebszustands einzelner Systemkomponenten kann durchgeführt werden. Im statischen Zustand ist die nachfolgende Weiterverarbeitungseinheit nicht aktiv. Die vorgelagerte Verarbeitungseinheit (z.B. Dialysewasseraufbereitung), hält dabei einen statischen Druck > 0 bar. Der Fluss im statischen Zustand beträgt 0l/min. Im statischen Zustand kann mittels Druckdifferenzbetrachtung das Produktionssystem auf Dichtheit geprüft werden. Fällt beispielsweise der Druck an einem der Drucksensoren ungeplant ab, so liegt eine Leckage des Produktionssystems vor.

Das Computersystem kann optional weiterhin über eine Ausgabeeinheit (z.B. Monitor, Drucker, etc.) verfügen, die den ermittelten Status der Produktionssystems für einen Benutzer visualisiert. Beispielsweise können in einem Anlagenplan des Produktionssystems die Betriebszustände der Systemkomponenten entsprechend gekennzeichnet werden. Dies kann z.B. über eine Farbkodierung (z.B. grün für störungsfrei, rot für Verblockung, blau für Reinigung, etc) oder durch graphische Animation (blinken, pulsierend, etc.) erreicht werden.

FIG. 3A und FIG. 3B zeigen beispielhaft einige Dämpfungskennlinien (Störfunktionen z(t)) für verschiedenen Typen von Systemkomponenten Produktionssystems. FIG. 3A zeigt dabei Dämpfungskennlinien von Systemkomponenten, deren Dämpfungsverhalten über die Zeit abnimmt. Dämpfungskennlinie d1 zeigt einen typischen Verlauf des Dämpfungsverhaltens über die Zeit für eine Rohwassereingangseinheit. Dämpfungskennlinie d2 zeigt einen typischen Verlauf des Dämpfungsverhaltens über die Zeit für eine Verschlauchung. Dämpfungskennlinie d3 zeigt einen typischen Verlauf des Dämpfungsverhaltens über die Zeit für einen Enthärter. FIG. 3B zeigt Dämpfungskennlinien von Systemkomponenten, deren Dämpfungsverhalten über die Zeit anwächst. Dämpfungskennlinie d4 zeigt einen typischen Verlauf des Dämpfungsverhaltens über die Zeit für einen Medienfilter. Partikelfilter weisen eine ähnliche Charakteristik auf. Dämpfungskennlinien d5 und d6 zeigen typische Verläufe des Dämpfungsverhaltens über die Zeit für zwei verschiedene Aktivkohlefilter.

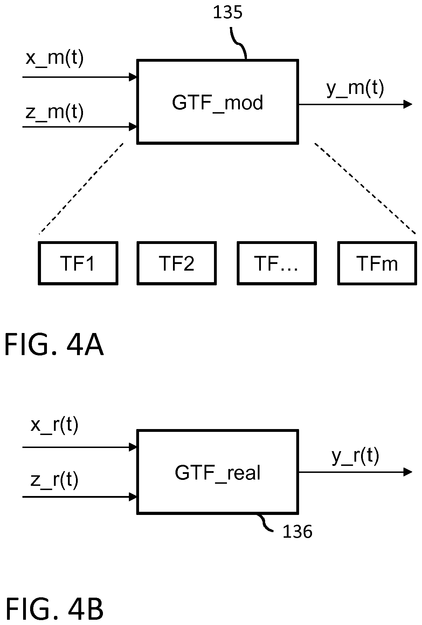

FIG. 4A veranschaulicht die Berechnung einer zeitabhängigen Modellübertragungsfunktion GTF_mod 135 für das gesamte kaskadierende Produktionssystem. Die Modellübertragungsfunktion GTF_mod ergibt sich aus den komponentenspezifischen Übertragungsfunktionen TF1 bis TFm und liefert die Modellimpulsantwort y_m(t) des Produktionssystems als Antwort auf den Input x_m(t) (Druckpuls) unter dem Einfluss einer zeitabhängigen Störgröße z_m(t). Die zeitabhängige Störgröße z_m(t) entspricht dem Gesamtstöreinfluss aller Systemkomponenten und stellt somit die Modellstörfunktion des Gesamtsystems dar, die sich auf Basis aller systemkomponentenspezifischen Dämpfungskennlinien ergibt.

FIG. 4B veranschaulicht die reale, auf Basis der Druckpulssignale, bestimme Übertragungsfunktion des GTF_real 136 des Produktionssystems. Dabei stellt x_r(t) das erste gemessene/ermittelte Druckpulssignal und y_r(t) das zweite gemessene Druckpulssignal (Impulsantwort) dar. z_r(t) charakterisiert die tatsächliche Systemdämpfung, welche in Summe durch den tatsächlichen Betriebszustand aller Systemkomponenten verursacht wird, sofern keine weiteren Druckverluste, wie z.B. durch die Nutzung eines drucklosen Tanks, eines Sedimentationsbeckens oder ähnlichem verursacht, vorliegen. Der Einfluss von solchen absoluten Druckverlusten kann durch das Erfassen des absoluten Drucks durch einen weiteren Sensor im Produktionssystem gemessen werden und dann entsprechend in die Berechnung der realen Übertragungsfunktion des Gesamtsystems einfließen. Beispielsweise kann durch solch einen weiteren Drucksensor der Druckpuls an einem drucklosen Tank im System gemessen werden. Durch den weiteren Drucksensor ist es möglich, die Gesamtübertragungsfunktion des Systems auf zwei hintereinandergeschaltete Übertragungsfunktionen zu teilen, wobei jede dieser Teilübertragungsfunktionen die Impulsantwort des jeweiligen Teilsystems vor bzw. nach dem drucklosen Tank abbildet. Die Änderung der von den beiden Sensoren bestimmten Änderung der Druckdifferenz ist mit der Dämpfung des Systems in Abhängigkeit der Zeit gleichzustellen. Handelt es sich bei den Systemkomponenten, die eine Filtrationsleistung aufweisen, wie z.B. die Filterkomponenten in FIG. 3B, so ist die Störgröße z_r(t) von der Anzahl der in die jeweiligen Filter eingeschwemmten Partikel abhängig.

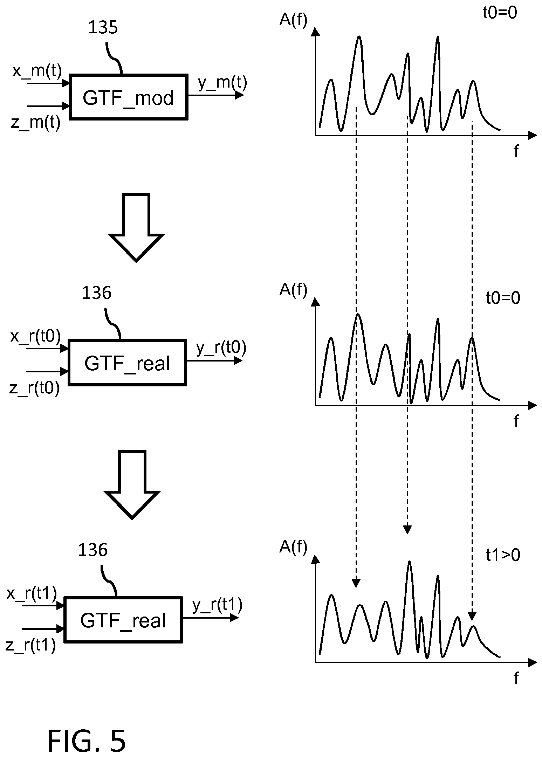

FIG. 5 veranschaulicht eine erfindungsgemäße Ausführungsform zum Abgleich der realen Übertragungsfunktion GTF_real 139 mit der Modellübertragungsfunktion GTF_mod 135, welche sich aus den gespeicherten Übertragungsfunktionen der einzelnen Systemkomponenten ergibt. FIG. 5 veranschaulicht drei Schritte, die wie durch die Pfeile angedeutet, in der Reihenfolge von oben nach unten abgearbeitet werden können. Im ersten Schritt berechnet das System die Modellübertragungsfunktion GTF_mod 135 für das Produktionssystem. Mit GTF_mod kann die Impulsantwort y_m(t) auf einen Druckpuls ermittelt werden. Die Abbildung zeigt ein Beispiel für die Modellimpulsantwort im Frequenzbereich zum Zeitpunkt t0=0 (störungsfreier Betriebszustand des Produktionssystems). Dabei stellen die Frequenz f und die Amplituden A(f) einzelner Frequenzspektrallinien charakteristische Linien für die einzelnen Systemkomponenten dar.

Im zweiten Schritt wird die reale Systemübertragungsfunktion GTF_real 136 auf Basis des ersten und zweiten Druckpulssignals ermittelt. Das dargestellte Frequenzspektrum zum Zeitpunkt t0=0 zeigt eine weitgehende Übereinstimmung mit dem Frequenzspektrum auf Basis der Modellübertragungsfunktion. Dies spricht für einen störungsfreien Betrieb des Produktionssystems zum Zeitpunkt t0=0.

Im dritten Schritt wird die reale Systemübertragungsfunktion GTF_real 136 zum Zeitpunkt t1>0 ermittelt. Zu diesem Zeitpunkt sind bereits Partikel in eine oder mehrere Filterkomponenten eingeschwemmt, was zu einer veränderten Dämpfung des Gesamtsystems führt. In der Spektralanalyse der Impulsantwort zeigen die drei mit gestrichelten Pfeilen markierten Spektrallinien signifikante Abweichungen vom störungsfreien Zustand. Aus der Modellübertragungsfunktion GTF_mod lassen sich die für die jeweiligen Spektrallinien verantwortlichen Systemkomponenten ermitteln. Aus der Abweichung der Amplitude bzw. der Frequenz der Spektrallinien lässt sich weiterhin auf die Art und das Ausmaß der Störung schließen, da mittels der zeitabhängigen Übertragungsfunktionen der betroffenen Systemkomponenten die daraus folgende zeitabhängige Übertragungsfunktion für das Gesamtsystem ermittelt werden kann und somit GTF_mod zum Zeitpunkt t1 berechnet werden kann. Der Abgleich der Modellrechnung mit der realen Messung kann dabei sowohl auf Basis der modellierten und realen Impulsantwort als auch auf Basis der modellierten und realen Übertragungsfunktionen erfolgen.

Für den Fall, dass das Produktionssystem mehrere Systemkomponenten des gleichen Typs beinhaltet, die gleiche oder ähnliche Übertragungsfunktionen besitzen, kann das System nicht ohne weiteres auf Basis der erfindungsgemäßen Analyse auf die spezielle Systemkomponente schließen, die sich in einem nicht störungsfreien Betriebszustand befindet. Für einen solchen Fall können z.B. unterschiedliche Instanzen von Systemkomponenten gleichen Typs mit integrierten Durchflusshülsen versehen werden, wobei jede Durchflusshülse einen definierten Druckabfall an der jeweiligen Systemkomponente verursacht. Dieser definierte Druckabfall addiert sich zum jeweiligen komponentenspezifischen Druckabfall und führt dazu, dass sich das Frequenzspektrum der entsprechenden komponentenspezifischen Übertragungsfunktion verändert. Die Durchflusshülsen sollten dabei der Sensorgenauigkeit der Druckmesssensoren sowie den Systemkomponenten in den genutzten Verarbeitungsstufen angepasst sein. Somit können unterschiedlich dimensionierte integrierte Durchflusshülsen die Übertragungsfunktionen von Systemkomponenten gleichen Typs unterscheidbar machen. Das gleiche Prinzip lässt sich auch auf redundante Verarbeitungsschritten des Produktionssystems anwenden.

Auf Basis dieser Analyse lassen sich unter anderem auch mittels geeigneter komponentenspezifischer Übertragungsfunktionen Reinigungszustände der einzelnen Komponenten erkennen. Das Computersystem kann somit automatisch erkennen, welche Art der Reinigung bereits erfolgt ist und ob diese korrekt abgelaufen ist. Die Reinigungszyklen können primär aus der Analyse der Übertragungsfunktionen bestimmt werden. Dies versetzt das Computersystem in die Lage Reinigungsvorgänge im Produktionssystem zeitlich abgestimmt zu veranlassen. Beispielsweise ist es möglich anhand der Analyse der Druckpulssignale und der entsprechenden Gesamtübertragungsfunktion und/oder komponentenspezifischen Übertragungsfunktionen eine bedarfsgesteuerte Rückspülung z.B. eines Sandfilters oder einen bedarfsgesteuerten Austausch von Tiefenfilterkartuschen durchzuführen. Dies reduziert Verbräuche des Fluids (z.B. Wasser) sowie den durch das Produktionssystem verursachten Stromverbrauch sowie Verbrauchsmaterialien in Abhängigkeit der Störgröße z(t). Hierfür kann das Computersystem durch Auslösen von Aktorsignalen über die Schnittstelle zum Produktionssystem entsprechende Aktoren bedarfsgesteuert ansteuern, die im Produktionssystem das Durchflussverhalten der Flüssigkeit verändern. Beispielsweise können die Aktoren bedarfsgesteuert entsprechende Regenerations- und/oder Spülungsvorgänge in Gang setzen. Verallgemeinert können Aktoren durch eine entsprechende Ansteuerung dazu eingesetzt werden, die Flussgeschwindigkeit oder den Durchflusspfad zu verändern. Dies kann z.B. erreicht werden über steuerbare
- drosselbare Ventile,
- Bypass-Schalter, die auf Ansteuerung den Fluss auf einen Bypass-Pfad umleiten,
- Druckschalter, oder
- andere Weichenaktoren (z.B. Y-Weichen),
Das Produktionssystem arbeitet somit durch das erfindungsgemäße Computerüberwachungssystem in Abhängigkeit der realen Fluidqualität, welche durch das System bereitgestellt wird (z.B., durch Normalbetrieb oder Reinigungsbetrieb).

Handelt es sich bei dem kaskadierenden Produktionssystem um eine Dialysewasseraufbereitungsanlage, so kann das Computersystem folgenden Faktoren bei der Nutzung des Produktionssystems entsprechend überwachen:
- Leckage des Produktionssystems
- Beladung der Filterkartuschen mit Störgrößen und Austauschzeitpunkte für Filterkartuschen
- Rückspülzeitpunkte von Filtern wie z.B. Sandfiltern oder Aktivkohlefiltern in Abhängigkeit der eingebrachten Störgrößen
- Regenerationszeitpunkte für Enthärter in Kombination mit einer Härtemesseinrichtung sowie daraus resultierend Zeitpunkte für das Nachfüllen von Salz zur Wasserenthärtung.

Das Produktionssystem kann neben dem ersten und zweiten Drucksensor weitere Sensorpaare aufweisen, die geeignet sind technische Parameter des Produktionssystems wie z.B. Chlorgehalt, Härt, Eisengehalt oder ph-Wert zu messen. Auch für diese technischen Parameter können komponentenspezifische Übertragungsfunktionen im Überwachungssystem gespeichert werden und daraus zusätzliche Informationen über den Betriebszustand der einzelnen Systemkomponenten in ähnlicher Art und Weise für die beschriebenen Druckparameter gewonnen werden. Eine erfindungsgemäße Reduktion der Anzahl an Sensoren lässt das Gesamtsystem robuster und wartungsärmer werden.

Das Computersystem kann weiterhin z.B. in der Auswerteeinheit Regeln verwalten, die beim Abgleich der Modellübertragungsfunktionen mit realen Übertragungsfunktionen eine Anpassung von Alarmgrenzen ermöglichen, bei deren Überschreiten ein Alarm ausgelöst wird, der einen nicht mehr tragbaren Betriebszustand des Produktionssystems signalisiert. Beispielsweise kann eine solche Alarmgrenze für einen Dämpfungswert gesetzt werden, der einer Filterblockung entspricht.

Die verschiedenen Druckpulsformen in FIG.2 können neben der Bestimmung der Betriebszustände einzelner Systemkomponenten auch dafür verwendet werden, aus der resultierenden Systemantwort Rückschlüsse auf die Dichtigkeit des gesamten Produktionssystems zu ziehen, Dämpfungsfaktoren für die systemkomponentenspezifischen Übertragungsfunktionen zu kalibrieren und Alarmgrenzen neu anzulegen, abzugleichen oder auszulösen.

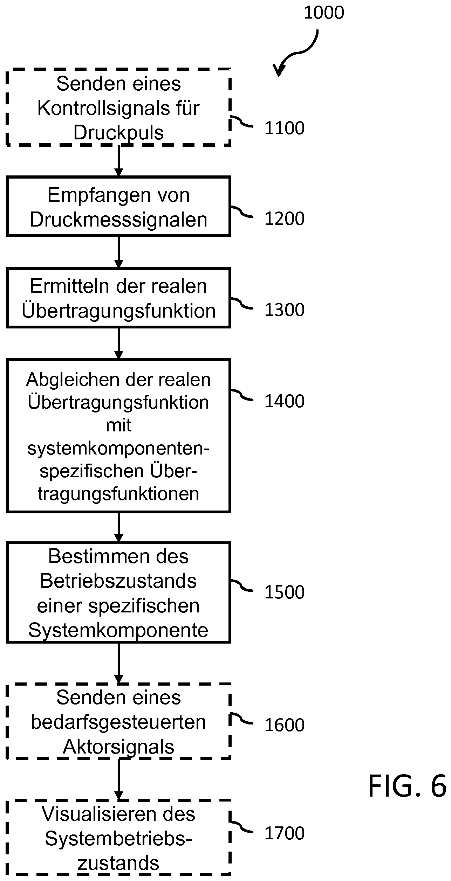

FIG. 6 ist ein vereinfachtes Ablaufdiagram eines erfindungsgemäßen computerimplementierten Verfahrens 1000 zur Bestimmung eines Betriebszustands mindestens einer Systemkomponente in einem fluidführenden kaskadierenden Produktionssystem. Schritte in gestrichelten Blöcken sind als optionale Schritte zu verstehen.

Die einzelnen Schritte des computerimplementierten Verfahrens können von den Komponenten des Computersystems 100 (vgl. FIG. 1) ausgeführt werden. Das Computersystem empfängt 1200 ein erstes und ein zweites Druckpulssignals von einem ersten und einem zweiten Drucksensor des Produktionssystems, wobei das erste Druckpulssignal einen Druckpuls vor Durchlaufen des Produktionssystems charakterisiert und das zweite Druckpulssignal den Druckpuls nach Durchlaufen des Produktionssystems charakterisiert. Das Computersystem ermittelt 1300 dann aus dem ersten und zweiten Druckpulssignal eine realen Übertragungsfunktion für das Produktionssystem. Die reale Übertragungsfunktion des Produktionssystems wird darauf mit einer gespeicherten Mehrzahl an systemkomponentenspezifischen Übertragungsfunktionen abgeglichen 1400, wobei eine systemkomponentenspezifische Übertragungsfunktion eine betriebszustandsabhängige Impulsantwort von mindestens einer Systemkomponente auf den Druckpuls beschreibt. Schließlich kann das Computersystem Betriebszustands einer spezifischen Systemkomponente des Produktionssystems auf Basis des Abgleichergebnisses bestimmen 1500. Die Schritte abgleichen 1400 und bestimmen 1500 zur Klassifizierung der realen Übertragungsfunktion des Produktionssystems hinsichtlich der Betriebszustände der Systemkomponenten können ein neuronales Netz verwenden. Dabei können die Übertragungsfunktionen der Systemkomponenten als Frequenzspektren hinterlegt sein. Jedes Frequenzspektrum bildet dabei eine betriebszustandsabhängige Impulsantwort einer zugehörigen Systemkomponente im Frequenzbereich ab. Die Schritte abgleichen 1400 und bestimmen 1500 werden dann im Frequenzbereich durchgeführt

Optional kann das Computersystem ein Kontrollsignal zur Erzeugung des Druckpulses in dem Produktionssystems generieren und an einen Pulsgeber des Produktionssystems senden 1100. Dieser Schritt kann zu Beginn des Verfahrens ausgeführt werden.

Nachdem das Computersystem anhand der Betriebszustandsermittlung für eine spezifische Komponente einen Bedarf für eine Regenration oder Spülung festgestellt hat, kann es optional ein bedarfsgesteuertes Aktorsignal an das Produktionssystem senden 1600, wobei das Aktorsignal im Produktionssystem einen Aktor anzusteuern kann, um den Regenerations- und/oder Spülungsvorgang in Gang zu setzen.

Der Fachmann kann die zuvor offenbarten vorteilhaften Ausführungsformen des Computersystems in die Überlegungen zur Ausführung des computerimplementierten Verfahrens mühelos mit einbeziehen.

Das computerimplementierte Verfahren 1000 kann beispielsweise vom unter FIG. 1 beschriebenen Computersystem ausgeführt werden, wenn das Computersystem ein Computerprogramm mit Instruktionen abarbeitet, die den Verfahrensalgorithmus implementieren.

Ausführungsformen der Erfindung können in Form von digitalen Schaltkreisen, Computerhardware, Firmware, Software oder in beliebigen Kombinationen davon implementiert werden. Die Erfindung kann weiterhin in Form eines Computerprogrammprodukts, z.B. eines Computerprogramms auf einem physischen Informationsträger (z.B., maschinenlesbares Speichermedium) implementiert werden, um von einer Datenverarbeitungsvorrichtung (z.B., programmierbarer Prozessor, Computer oder kommunikativ gekoppelte Computer) ausgeführt zu werden oder deren Betrieb zu steuern. Ein Computerprogrammprodukt wie beansprucht kann in einer beliebigen Programmiersprache erstellt sein, wobei auch kompilierte oder interpretierte Sprachen eingeschlossen sind. Es kann in beliebiger Form eingesetzt werden, beispielsweise als alleinstehendes Programm, Modul, Komponente, Unterprogramm oder als andere Einheit, die geeignet ist, um in einem Datenverarbeitungssystem benutzt zu werden.

Das Computerprogramm kann von einem Computer ausgeführt werden oder aber auch durch mehrere über ein Kommunikationsnetzwerk miteinander verbundene Computer entweder an einem Ort oder über mehrere Orte verteilt. Ein computerimplementiertes Verfahren kann durch das Ausführen entsprechender Computerprogrammprodukte auf entsprechenden Datenverarbeitungsvorrichtungen ausgeführt werden.

Verfahrensschritte gemäß der Erfindung können von einem oder mehreren programmierbaren Prozessoren durch abarbeiten des Computerprogramms ausgeführt werden, um die erfindungsgemäßen Funktionen auszuführen, wobei Eingangsdaten verarbeitet werden und entsprechende Ausgangsdaten dabei erzeugt werden. Die Verfahrensschritte können auch durch spezielle Logikbausteine wie z.B. field programmable gate arrays (FPGA) oder application-specific integrated circuits (ASIC) ausgeführt werden.

Beispiele für Prozessoren, die geeignet zur Ausführung des Computerprogramms sind, beinhalten allgemeine oder spezialisierte Mikroprozessoren und jegliche Ein- oder Mehrprozessorlösung eines beliebigen digitalen Computers. Im allgemeinen erhält eine Prozessor Instruktionen und Daten von einem Read-Only Memory (ROM) oder Random Access Memory (RAM) oder von beiden. Die wesentlichen Elemente eines Computers sind mindestens ein Prozessor und ein oder mehrere Speichermedien, um Daten und Instruktionen zu speichern. Im Allgemeinen ist ein Computer auch mit einem oder mehreren Massenspeichermedien (z.B. magnetische, magneto-optische, optische oder solid state (SSD) Speichermedien) gekoppelt, um davon Daten zu empfangen oder Daten dort abzuspeichern. Solche Speichermedien können auch bei Bedarf (on demand) bereitgestellt werden oder über das Internet erreichbar sein (z.B. Cloud Computing). Geeignete Datenträger zum Abspeichern von Programminstruktionen und Daten umfassen alle Arten von nicht-flüchtigen Speicherelementen wie Halbleiterspeicherelemente (z.B. EPROM, EEPROM), Flash-Memory Vorrichtungen, magnetische oder magneto-optische Speichermedien, CD-ROM, DVD-ROM oder Blue-Ray Disks. Die Prozessor- und Speicherelemente können ergänzt werden durch spezielle Logikbausteine, oder auch Teil dieser sein.

Um die Interaktion mit dem Benutzer zu ermöglichen, kann die Erfindung auf einem Computer implementiert sein, der mindestens eine Ausgabevorrichtung (z.B., LCD Monitor, Lautsprecher, etc.) und mindestens eine Eingabevorrichtung (z.B. Tastatur, Touchscreen, Mikrofon, Zeigevorrichtung wie Maus oder Trackball) umfasst.

Der Erfindung kann auf einer Datenverarbeitungsvorrichtung implementiert werden, die eine Backend-Komponente (z.B. Datenserver) umfasst, oder eine Middleware-Komponente (z.B. Anwendungsserver), oder eine Frontend-Komponente (z.B. Client-Computer mit graphischem Benutzerinterface oder Webbrowser) worüber der Benutzer mit einer Ausführungsform der Erfindung interagieren kann, oder jegliche Kombination von Backend-, Middleware- und Frontendkomponenten.

Clientcomputer können auch mobile Endgeräte sein wie beispielsweise Smartphones, Tablet PCs oder jede beliebige tragbare Computervorrichtung. Die Komponenten des Systems können miteinander kommunikativ gekoppelt sein (z.B. mittels eines Kommunikationsnetz Werks wie Local Area Network LAN oder Wide Area Network WAN, Internet oder drahtlosen LAN oder Telekommunikationsnetzwerken).

Das Computersystem kann Clients und Server umfassen. Ein Client und ein Server sind im Allgemeinen physisch voneinander entfernt und interagieren über ein Kommunikationsnetzwerk. Die Beziehung zwischen Client und Server entsteht dabei durch Computerprogramme, die auf den jeweiligen Computern ausgeführt werden und die eine Client-Server Beziehung untereinander haben.

## Patentansprüche

1. Computersystem (100) zur Bestimmung eines Betriebszustands mindestens einer Systemkomponente (K1 bis Kp) in einem fluidführenden kaskadierenden Produktionssystem (200), umfassend:
eine Schnittstelle (110), welche konfiguriert ist, ein erstes und ein zweites Druckpulssignal (201, 202) zu empfangen, wobei das erste Druckpulssignal (201) einen Druckpuls vor Durchlaufen des Produktionssystems (200) charakterisiert und das zweite Druckpulssignal (202) den Druckpuls nach Durchlaufen des Produktionssystems (200) charakterisiert;
eine Speichereinheit (120), welche konfiguriert ist, eine Mehrzahl an systemkomponentenspezifischen Übertragungsfunktionen (TF1 bis TFm) zu speichern, wobei eine systemkomponentenspezifische Übertragungsfunktion (TF1 bis TFm) eine betriebszustandsabhängige Impulsantwort von mindestens einer Systemkomponente (K1 bis Kp) auf einen eingehenden Druckpuls beschreibt; und
eine Auswerteeinheit (130), welche konfiguriert ist, aus dem ersten und zweiten Druckpulssignal (201, 202) eine reale Übertragungsfunktion für das Produktionssystem zu ermitteln und die reale Übertragungsfunktion des Produktionssystems (200) mit der gespeicherten Mehrzahl an Übertragungsfunktionen (TF1 bis TFm) für die Systemkomponenten abzugleichen, um daraus den Betriebszustand einer spezifischen Systemkomponente (K1 bis Kp) des Produktionssystems (200) zu bestimmen.

2. Computersystem nach Anspruch 1, wobei die Schnittstelle (110) weiterhin konfiguriert ist, ein drittes Druckpulssignal zu empfangen, welches einen absoluten Druckabfall im Produktionssystem charakterisiert und bei der Ermittlung der Übertragungsfunktion für das Produktionssystem berücksichtigt wird.

3. Computersystem nach einem der vorhergehenden Ansprüche, weiterhin umfassend: einen Signalgenerator, welcher konfiguriert ist, ein Kontrollsignal (220) zur Erzeugung eines Druckpulses in dem Produktionssystem (200) zu erzeugen.

4. Computersystem nach einem der vorhergehenden Ansprüche, wobei die Übertragungsfunktionen (TF1 bis TFm) der Systemkomponenten (K1 bis Kp) als Frequenzspektren hinterlegt sind und jedes Frequenzspektrum eine betriebszustandsabhängige Impulsantwort einer zugehörigen Systemkomponente im Frequenzbereich abbildet.

5. Computersystem nach Anspruch 4, wobei eine Veränderung des Betriebszustands einer spezifischen Systemkomponente einer Veränderung des zugehörigen Frequenzspektrums in einer charakteristischen Frequenz und/oder der Frequenzamplitude entspricht.

6. Fluidführendes kaskadierendes Produktionssystem (200) umfassend
eine Mehrzahl kaskadierend angeordneter Systemkomponenten (K1 bis Kp) zur Verarbeitung einer Flüssigkeit im Produktionssystem,
eine Druckpulserzeugungskomponente (PG) zur Erzeugung eines Druckpulses an einer
Stelle im Produktionssystem, die hinsichtlich der Ausbreitungsrichtung der durch den Druckpuls ausgelösten Druckwelle vor den kaskadierend angeordneten Systemkomponenten des Produktionssystems (200) liegt,
mindestens einen Drucksensor (S1, S2) zur Erfassung eines Druckpulssignals an einer Stelle im Produktionssystem, die hinsichtlich der Ausbreitungsrichtung der durch den Druckpuls ausgelösten Druckwelle nach der letzten kaskadierend angeordneten Systemkomponente liegt, und
ein Computersystem (100) nach einem der vorhergehenden Ansprüche.

7. Produktionssystem nach Anspruch 6, wobei eine spezifische Systemkomponente (K1 bis Kp) als Instanz eines der folgenden Komponententypen ausgebildet ist:
Rohwassereingangseinheit, Rohwassertank, Medienfilter, Partikelfilter, Enthärter, Aktivkohlefilter, Tiefenfilterkartusche, Grobfilter und Spiralfilter..

8. Produktionssystem nach Anspruch 6 oder 7, wobei eine Mehrzahl von unterschiedlichen Instanzen von Systemkomponenten gleichen Komponententyps mit jeweils unterschiedlich angepassten integrierten Durchflusshülsen versehen sind, so dass jede Instanz mit ihrer jeweiligen integrierten Durchflusshülse eine unterscheidbare komponentenspezifische Übertragungsfunktion besitzt.

9. Produktionssystem nach einem der Ansprüche 6 bis 8, wobei das Produktionssystem mindestens einen Aktor umfasst, der konfiguriert ist, um in Antwort auf ein vom Computersystem empfangenes bedarfsgesteuertes Aktorsignal im Produktionssystem das Durchflussverhalten der Flüssigkeit zu verändern.

10. Computerimplementiertes Verfahren (1000) zur Bestimmung eines Betriebszustands mindestens einer Systemkomponente in einem fluidführenden kaskadierenden Produktionssystem, umfassend:
empfangen (1200) eines ersten und eines zweiten Druckpulssignals (201, 202), wobei das erste Druckpulssignal (201) einen Druckpuls vor Durchlaufen des Produktionssystems (200) charakterisiert und das zweite Druckpulssignal (202) den Druckpuls nach Durchlaufen des Produktionssystems (200) charakterisiert;
ermitteln (1300) einer realen Übertragungsfunktion für das Produktionssystem (200) aus dem ersten und zweiten Druckpulssignal (201, 202);
abgleichen (1400) der realen Übertragungsfunktion des Produktionssystems (200) mit einer gespeicherten Mehrzahl an systemkomponentenspezifischen Übertragungsfunktionen (TF1 bis TFm), wobei eine systemkomponentenspezifische Übertragungsfunktion (TF1 bis TFm) eine betriebszustandsabhängige Impulsantwort von mindestens einer Systemkomponente (K1 bis Kp) auf einen eingehenden Druckpuls beschreibt; und
bestimmen (1500) des Betriebszustands einer spezifischen Systemkomponente (K1 bis Kp) des Produktionssystems (200) auf Basis des Abgleichergebnisses.

11. Computerimplementiertes Verfahren (1000) nach Anspruch 10 weiterhin umfassend:
senden (1100) eines Kontrollsignals (220) zur Erzeugung eines Druckpulses in dem Produktionssystems (200);

12. Computerimplementiertes Verfahren (1000) nach Anspruch 10 oder 11 weiterhin umfassend:
senden (1600) eines bedarfsgesteuerten Aktorsignals an das Produktionssystem, wobei das Aktorsignal konfiguriert ist, um im Produktionssystem einen Aktor zur Ingangsetzung eines Regenerations- und/oder Spülungsvorgang anzusteuern.

13. Computerimplementiertes Verfahren (1000) nach einem der Ansprüche 10 bis 12, wobei die Übertragungsfunktionen (TF1 bis TFm) der Systemkomponenten (K1 bis Kp) als Frequenzspektren hinterlegt sind und jedes Frequenzspektrum eine betriebszustandsabhängige Impulsantwort einer zugehörigen Systemkomponente im Frequenzbereich abbildet und die Schritte abgleichen und bestimmen im Frequenzbereich durchgeführt werden.

14. Computerimplementiertes Verfahren (1000) nach einem der Ansprüche 10 bis 13, wobei die Schritte abgleichen und bestimmen zur Klassifizierung der Übertragungsfunktion des Produktionssystems (200) hinsichtlich der Betriebszustände der Systemkomponenten ein neuronales Netz verwenden.

15. Computerprogrammprodukt umfassend Instruktionen, welche beim Laden in mindestens ein Speichermodul eines Computersystems und Abarbeiten durch mindestens einen Prozessor des Computersystems das computerimplementierte Verfahren nach einem der Ansprüche 10 bis 14 ausführen.

## Claims

1. A computer system (100) for determining an operating state of at least one system component (K1 to Kp) in a cascading, fluid-carrying production system (200), comprising:
- an interface (110), which is configured to receive a first and a second pressure pulse signal (201, 202), wherein the first pressure pulse signal (201) characterizes a pressure pulse before passing through the production system (200), and the second pressure pulse signal (202) characterizes the pressure pulse after passing through the production system (200);
- a memory unit (120), which is configured to store a plurality of system component-specific transfer functions (TF1 to TFm), wherein a system component-specific transfer function (TF1 to TFm) describes a pulse response of at least one system component (K1 to Kp), which depends on the operating state, to an incoming pressure pulse; and
- an evaluation unit (130), configured to determine a real transfer function for the production system from the first and second pressure pulse signals (201, 202) and to adjust the real transfer function of the production system (200) with the stored plurality of transfer functions (TF1 to TFm) for the system components in order to determine the operating status of a specific system component (K1 to Kp) of the production system (200) therefrom.

2. The computer system according to claim 1, wherein the interface (110) is additionally configured to receive a third pressure pulse signal, which characterizes an absolute drop in pressure in the production system and is taken into account in determining the transfer function for the production system.

3. The computer system according to any one of the preceding claims, additionally comprising:
a signal generator, configured to generate a control signal (220) for generating a pressure pulse in the production system (200).

4. The computer system according to any one of the preceding claims, wherein the transfer functions (TF1 to TFm) of the system components (K1 to Kp) are saved as frequency spectra, each frequency spectrum maps a pulse response, which depends on the operating state, of the respective system component in the frequency range.

5. The computer system according to claim 4, wherein a change in an operating state of a specific system component corresponds to a change in the respective frequency spectrum in a characteristic frequency and/or in the frequency amplitude.

6. A cascading, fluid-carrying production system (200), comprising:
a plurality of system components (K1 to Kp) in a cascading arrangement for processing a liquid in the production system,
a pressure pulse-generating component (PG) for generating a pressure pulse at a location in the production system, which is upstream from the system components of the production system (200) in a cascading arrangement with regard to the direction of propagation of the pressure wave triggered by the pressure pulse,
at least one pressure sensor (S1, S2) for detecting a pressure pulse signal at a location in the production system, which is downstream from the last system component in a cascading arrangement with regard to the direction of propagation of the pressure wave triggered by the pressure pulse, and
a computer system (100) according to any one of the preceding claims.

7. The production system according to claim 6, wherein a specific system component (K1 to Kp) is designed as an instance of one of the following types of components:
raw water intake unit, raw water tank, media filter, particle filter, water softener, active carbon filter, depth filter cartridge, coarse filter and spiral filter.

8. The production system according to claim 6 or 7, wherein a plurality of different instances of system components of the same type of component is provided with differently adjusted, integrated flow tubes, so that each instance with its respective integrated flow tube has a distinctive component-specific transfer function.

9. The production system according to any one of claims 6 to 8, wherein the production system comprises at least one actuator, configured to alter the flow behavior of the liquid in the production system in response to a demand-controlled actuator signal received by the computer system.

10. A computer-implemented method (1000) for determining an operating state of at least one system component in a cascading, fluid-carrying production system, comprising:
receiving (1200) a first and a second pressure pulse signal (201, 202), wherein
the first pressure pulse signal (201) characterizes a pressure pulse before passing through the production system (200), and the second pressure pulse signal (202) characterizes the pressure pulse after passing through the production system (200);
determining (1300) a real transfer function for the production system (200) from the first and second pressure pulse signals (201, 202);
adjusting (1400) the real transfer function of the production system (200) with a saved plurality of system component-specific transfer functions (TF1 to TFm), wherein a system component-specific transfer function (TF1 to TFm) describes an operating state-dependent pulse response of at least one system component (K1 to Kp) to an incoming pressure pulse; and
determining (1500) the operating state of a specific system component (K1 to Kp) of the production system (200), based on the result of the adjustment.

11. The computer-implemented method (1000) according to claim 10, additionally comprising:
sending (1100) a control signal (220) for generating a pressure pulse in the production system (200).

12. The computer-implemented method (1000) according to claim 10 or 11, additionally comprising:
sending (1600) a demand-controlled actuator signal to the production system, wherein the actuator signal is configured to trigger an actuator in the production system for initiating a regeneration process and/or rinsing process.

13. The computer-implemented method (1000) according to any one of claims 10 to 12, wherein the transfer functions (TF1 to TFm) of the system components (K1 to Kp) are saved as frequency spectra, and each frequency spectrum maps a pulse response of a respective system component in the frequency range, wherein the pulse response is a function of the operating state, and the steps of adjusting and determination are carried out in the frequency range.

14. The computer-implemented method (1000) according to any one of claims 10 to 13, wherein the steps of adjusting and determination use a neural network for classification of the transfer function of the production system (200) with regard to the operating states of the system components.

15. A computer program product, comprising instructions which execute the computer-implemented method according to any one of claims 10 to 14 on being loaded into at least one memory module of a computer system and processing by at least one processor of the computer system.

## Revendications

1. Système informatique (100) pour la définition d'un état de fonctionnement d'au moins un composant de système (K1 à Kp) dans un système de production en cascade conducteur de fluide (200), comprenant :
une interface (110) qui est conçue pour recevoir un premier et un deuxième signal d'impulsion de pression (201,202), le premier signal d'impulsion de pression (201) caractérisant une impulsion de pression avant passage dans le système de production (200) et le deuxième signal d'impulsion de pression (202) caractérisant l'impulsion de pression après passage dans le système de production (200) ;
une unité de mémoire (120) qui est conçue pour sauvegarder une pluralité de fonctions de transfert spécifiques aux composants du système (TF1 à TFm), une fonction de transfert spécifique aux composants du système (TF1 à TFm) décrivant une réponse d'impulsion dépendant de l'état de fonctionnement d'au moins un composant du système (TF1 à TFm) à une impulsion de pression entrante ; et
une unité d'exploitation (130) qui est conçue pour déterminer, à partir du premier et du deuxième signal d'impulsion de pression (201,202), une fonction de transfert réelle pour le système de production et pour aligner la fonction de transfert réelle du système de production (200) avec la pluralité sauvegardée de fonctions de transfert (TF1 à TFm) pour les composants du système afin de déterminer à partir de là l'état de fonctionnement d'un composant de système spécifique (K1 à Kp) du système de production (200).

2. Système informatique selon la revendication 1, dans lequel l'interface (110) est en outre conçue pour recevoir un troisième signal d'impulsion de pression qui caractérise une chute de pression absolue dans le système de production et dont il est tenu compte lors de la détermination de la fonction de transfert pour le système de production.

3. Système informatique selon une des revendications précédentes, comprenant en outre :
un générateur de signal qui est conçu pour générer un signal de commande (220) pour générer une impulsion de pression dans le système de production (200).

4. Système informatique selon une des revendications précédentes, dans lequel les fonctions de transfert (TF1 à TFm) des composants du système (K1 à Kp) sont enregistrées sous forme de spectres de fréquence et chaque spectre de fréquences illustre une réponse d'impulsion dépendant de l'état de fonctionnement d'un composant de système corrélatif dans la plage de fréquence.

5. Système informatique selon la revendication 4, dans lequel une modification de l'état de fonctionnement d'un composant spécifique du système correspond à une modification du spectre de fréquence corrélatif dans une fréquence caractéristique et/ou à l'amplitude de fréquences.

6. Système de production en cascade conducteur de fluide (200), comprenant
une pluralité de composants de système disposés en cascade (K1 à Kp) pour le traitement d'un liquide dans le système de production,
un composant de génération d'impulsion de pression (PG) pour la génération d'une impulsion de pression à un endroit dans le système de production qui, du point de vue du sens de diffusion de l'onde de pression déclenchée par l'impulsion de pression, se situe en amont des composants de système disposés en cascade du système de production (200),
au moins un capteur de pression (S1, S2) pour détecter un signal d'impulsion de pression à un endroit dans le système de production qui, du point de vue du sens de diffusion de l'onde de pression déclenchée par l'impulsion de pression, se situe en aval du dernier composant de système disposé en cascade du système de production (200).

7. Système de production selon la revendication 6, dans lequel un composant de système spécifique (K1 à Kp) est réalisé sous forme d'instance d'un des types de composants suivants :
unité d'entrée d'eau brute, réservoir à eau brute, filtre à fluide, filtre à particules, adoucisseur, filtre à charbon actif, cartouche de filtration en profondeur, filtre grossier et filtre en spirale.

8. Système de production selon la revendication 6 ou 7, dans lequel une pluralité d'instances différentes de composants de système de même type de composant sont pourvues de tubes d'écoulement intégrés respectivement adaptés ce différemment, de sorte que chaque instance possède, avec son tube d'écoulement respectif intégré, une fonction de transfert différenciable spécifique aux composants.

9. Système de production selon une des revendications 6 à 8, dans lequel le système de production comprend au moins un acteur qui est conçu pour, en réaction à un signal d'acteur contrôlé par le besoin, reçu par le système informatique, modifier le comportement d'écoulement du liquide dans le système de production.

10. Procédé mis en oeuvre par ordinateur (1000) pour la définition d'un état de fonctionnement d'au moins un composant de système (K1 à Kp) dans un système de production en cascade conducteur de fluide (200), comprenant :
la réception (1200) d'un premier et d'un deuxième signal d'impulsion de pression (201,202), le premier signal d'impulsion de pression (201) caractérisant une impulsion de pression avant passage dans le système de production (200) et le deuxième signal d'impulsion de pression (202) caractérisant l'impulsion de pression après passage dans le système de production (200) ;
la détermination (1300) d'une fonction de transfert pour le système de production (200) à partir du premier et du deuxième signal d'impulsion de pression (201,202) ;
l'alignement (400) de la fonction de transfert réelle du système de production (200) avec une pluralité sauvegardée de fonctions de transfert spécifiques aux composants du système (TF1 à TFm), une fonction de transfert spécifique aux composants du système (TF1 à TFm) décrivant une réponse d'impulsion dépendant de l'état de fonctionnement d'au moins un composant du système (TF1 à TFm) à une impulsion de pression entrante ; et
la définition (1500) de l'état de fonctionnement d'un composant spécifique du système (K1 à Kp) du système de production (200) sur la base du résultat.

11. Procédé mis en oeuvre par ordinateur (1000) selon la revendication 10, comprenant en outre :
l'envoi (1100) d'un signal de commande (220) pour générer une impulsion de pression dans le système de production (200).

12. Procédé mis en oeuvre par ordinateur (1000) selon la revendication 10 ou 11, comprenant en outre :
l'envoi (1600) d'un signal d'acteur commandé par le besoin au système de production, le signal d'acteur étant conçu pour commander dans le système de production un acteur pour la mise en marche d'un processus de régénération et/ou de lavage.

13. Procédé mis en oeuvre par ordinateur (1000) selon une des revendications 10 à 12, dans lequel les fonctions de transfert (TF1 à TFm) des composants du système (K1 à Kp) sont enregistrées sous forme de spectres de fréquence et chaque spectre de fréquences illustre une réponse d'impulsion dépendant de l'état de fonctionnement d'un composant de système corrélatif et les étapes d'alignement et de définition dans la plage de fréquence sont réalisées.

14. Procédé mis en oeuvre par ordinateur (1000) selon une des revendications 10 à 13, dans lequel les étapes d'alignement et de définition utilisent un réseau neuronal pour la classification de la fonction de transfert du système de production (200) au niveau des états de fonctionnement des composants du système.

15. Produit de programmation informatique comprenant des instructions qui, en cas de chargement dans au moins un module de mémoire d'un système informatique et de traitement par au moins un processeur du système informatique, réalisent le procédé mis en oeuvre par ordinateur selon une des revendications 10 à 14. Si.
